# EUROPÄISCHE PATENTSCHRIFT

(11) **EP 2 199 175 B1**
(45) Veröffentlichungstag und Bekanntmachung des Hinweises auf die Patenterteilung: **15.08.2012**
(21) Anmeldenummer: 09177664.1
(22) Anmeldetag: 01.12.2009
(51) Int. Cl.: B61D 17/18, B60R 13/02, B62D 31/02

(54) **Innenbekleidungssystem für Fahrzeuge im Personenverkehr**
Interior cladding system for vehicles in passenger transport
Système de revêtement interne pour véhicules dans le transport de personnes

(30) Priorität: 17.12.2008 DE 102008063461
(43) Veröffentlichungstag der Anmeldung: 23.06.2010
(73) Patentinhaber: Siemens Aktiengesellschaft, 80333 München (DE)
(72) Erfinder: Lohmann, Thomas, 46485, Wesel (DE); Schade, Burkhard, 44879, Bochum (DE); Wehling, Ludwig, 46325, Borken (DE)

(56) Entgegenhaltungen:
- EP-A1- 0 803 403
- DE-A1- 10 349 790
- US-B1- 6 257 652

## Beschreibung

Die Erfindung betrifft ein Innenbekleidungssystem für Fahrzeuge im Personenverkehr, insbesondere Seitenwand- und Deckenbekleidungen in Schienenfahrzeugen des Nah- und Fernverkehrs, bestehend aus austauschbaren Dekorplatten und Formteilen, wie Vouten im Übergangsbereich zwischen den Seitenwand- und Deckenbekleidungen, sowie Sitzträgerprofilen zur Befestigung der Passagiersitze.

Ein solches Innenbekleidungssystem für Fahrzeuge im Personenverkehr ist beispielsweise aus der EP 0 803 403 A1 bekannt, wobei dort zur lösbaren Befestigung von Verkleidungsteilen im Innenraum eines Fahrzeugs zusätzliche, durchgehende Profile vorgesehen werden, mit deren Hilfe Verkleidungsteile steckbar und klemmbar werden. Eine unmittelbare Verbindung der Innenbekleidungsteile untereinander ist dort nicht beschrieben.

Des Weiteren ist aus der DE 103 49 790 A1 ein Bauelement zur Herstellung von Boden- oder Wandverkleidungen bekannt. Auf einer Trägerschicht, die mehrere Nut-/Federverbindungen aufweist, sind Verkleidungselemente aufgebracht. Deren jeweils zugeordnete Kanten stoßen aneinander an.

Aus der US 6,257,652 B1 ist ein Personenbeförderungsfahrzeug bekannt, bei dem übereinander angeordnete Verkleidungselemente über eine Gelenkverbindung aneinander angebracht sind, so dass eines der Verkleidungselemente gegenüber dem anderen verschwenkbar angeordnet ist.

Das Sitzträgerprofil, die Seitenwandbekleidungen, die Vouten und die Innendecken sind bisher als monofunktionale Einzelteile mit Schnittstellen untereinander an separaten Befestigungspunkten am Rohbau des Wagenkastens befestigt worden. Die Seitenwandbekleidung besteht gewöhnlich aus unempfindlichen leicht ausbaubaren GFK-Formteilen und Dekorplatten, in die bedarfsweise Abluftöffnungen eingebracht worden sind, durch die die Luft im Fahrzeug zirkulieren konnte. Der Montageaufwand des gesamtem Innenbekleidungssystem gestaltet sich dadurch aufwendig, dass eine individuelle Anpassung der Formteile und Dekorplatten an ihre Einbauorte und Befestigungspunkte vorgenommen werden musste; hinzukommt das Einbringen der Abluftöffnungen in die jeweiligen Bauteile, das sich als zeit- und damit kostenaufwendig erwies. Die Ausrichtung der Formteile und die Dekorplatten zueinander gestalteten sich schwierig, insbesondere bei Toleranzunterschieden der stirnseitig aneinander stoßenden Teile.

Ebenfalls aufwändig war bislang die gelegentlich erforderliche Demontage der Innenbekleidungsteile zu Reparatur- und Wartungsarbeiten, weil häufig mehrere andere Teile zunächst entfernt werden musste, um an ein bestimmtes Teil der Innenbekleidung zu gelangen. Die aufwändige Demontage zur Wartungs- und Reparaturzwecken kostete deshalb Zeit und verursachte damit Kosten.

Aufgabe der vorliegenden Erfindung ist es, ein Innenbekleidungssystem für Fahrzeuge im Personenverkehr so zu gestalten, dass die Montage- und Demontage sowie die Wartung insgesamt deutlich vereinfacht werden und durch den geringeren Zeitaufwand erheblich Kosten gespart werden.

Zur Lösung der Aufgabe wird erfindungsgemäß vorgeschlagen, das Innenbekleidungssystem als modulares Stecksystem auszuführen, bei dem die einzelnen Formteile und Dekorplatten mit ineinandersteckbaren Kantenbereichen versehen sind. Durch die Verwendung eines Stecksystems statt der individuellen Befestigung jedes Innenbekleidungsteils am Rohbau wird nicht nur Zeit für den Einbau selbst eingespart, auch das Ausrichten wird deutlich vereinfacht.

Nach einem besonderen Merkmal der Erfindung sind die einsteckbaren Kantenbereiche der Formteile und Dekorplatten derart gestaltet, dass jeweils einer der Kantenbereiche den anderen Kantenbereich stirnseitig übergreift. Die Teile brauchen damit nicht mehr mit ihren Stirnseiten aneinanderliegend montiert und befestigt zu werden, sie werden lediglich ineinander gesteckt und können somit für das Auge unsichtbar geringfügig ausgerichtet werden.

Die Steckverbindung kann nach einem weiteren Merkmal der Erfindung so gestaltet sein, dass in die Stirnfläche des Kantenbereichs des einen zu verbindenden Formteils oder der Dekorplatte eine Nut eingearbeitet ist, deren lichte Weite mindestens der Dicke der einzusteckenden Kante des anderen Formteils oder der Dekorplatte entspricht. Bei dieser Ausführungsform muss die eine Dekorplatte oder das eine Formteil deutlich dicker sein, damit das jeweils andere dünnere Formteil oder die Dekorplatte in die Nut eingesteckt werden kann. Eine solche Verbindung bietet sich beispielsweise zwischen Deckenbekleidung und Voute an.

In einer Ausgestaltung der Erfindung ist vorgesehen, dass der einzusteckende Kantenbereich des Formteils oder der Dekorplatte derartig gekröpft ist, dass im eingesteckten Zustand die in das Fahrzeuginnere gewandten benachbarten Oberflächen der beiden ineinander gesteckten Formteile oder Dekorplatten in eine gemeinsamen Ebene angeordnet sind. Bei dieser Lösung ist ein guter optischer Gesamteindruck gegeben, weil die Kantenbereiche weitgehend glatt und eben ausgebildet sind.

In einer anderen Ausgestaltung des Innenbekleidungssystems ist vorgesehen, dass der Kantenbereich einer der Formteile oder Dekorplatten zur Aufnahme des Kantenbereichs des anderen Formteils oder der Dekorplatte stirnseitig u-förmig erweitert ist. Derartige Erweiterungen sind bei den vorwiegend aus Kunststoff bestehenden Formteilen oder Dekorplatten ohne weiteres herstellbar; die u-förmige Erweiterung übergreift den Kantenbereich der in sie eingesteckten anderen Dekorplatte oder des Formteils.

Bei gattungsgemäßen Fahrzeugen im Personenverkehr besteht die Notwendigkeit, eine ausreichende Luftzirkulation im Fahrzeug vorzusehen. Innenbekleidungssysteme werden deshalb mit Abluftöffnungen versehen, durch die die Luft zirkulieren und ausgetauscht werden kann. Bei der erfindungsgemäßen Lösung wird die Steckverbindung selbst als Abluftöffnung verwendet, in dem der Zwischenraum zwischen dem übergreifenden Bereich der Voute und dem von dieser übergriffenen Seitenwand so ausreichend weit gewählt ist, dass die Luft hindurchzirkulieren kann.

In einer anderen Ausgestaltung der Erfindung und zur Lösung des Problems der Luftzirkulation wird vorgeschlagen, dass die Steckverbindung nur zwischen Voute und Deckenbekleidung vorgesehen ist, während im Bereich zwischen Voute und Seitenwandbekleidung ein Spalt zur Luftzirkulation belassen ist. Auch diese Lösung ermöglicht einen problemlosen Luftaustausch einerseits und andererseits eine leichte und schnelle Montage von Voute und Deckenteil mittels des modularen Stecksystems.

In Fahrzeugen der beanspruchten Gattung ist es üblich, die Passagiersitze des Fahrzeuges an Sitzträgerprofilen zu befestigen, die vorzugsweise an der Seitenwand des Rohbaus montiert werden. Diese eignen sich gleichzeitig zur Befestigung der die Seitenwand bildenden Dekorplatten, in dem nach einem weiteren Merkmal der Erfindung die an den Seitenwänden des Fahrzeuges angeordnete, zur Befestigung der Passgiersitze dienenden Sitzträgerprofile zur Steckaufnahme von Formteilen und Dekorplatten gestaltet sind. Vorzugsweise enthalten die Sitzträgerprofile eine u-förmige Aufnahme für den Kantenbereich einer ein Seitenwand bildenden Dekorplatte.

Der Vorteil der Erfindung besteht darin, dass durch die Verwendung eines Stecksystems mit gegebenenfalls integrierten Abluftöffnungen die gesamten Innenbekleidungsteile problemlos ausgerichtet und montiert werden können. Neben den Vorteilen bei der Erstmontage bestehen auch für Wartung und eventuelle Demontage bzw. den Tausch einzelner Komponenten wesentliche Vorteile, da diese zentral zugänglich sind und so einfach ausgetauscht werden können. Ausrichtungs- und Einstellarbeiten bei der Montage oder Demontage entfallen weitgehend. Selbst große Subsysteme, wie z.B. die Dekorplatten der Innenwandbekleidung können komplett ohne Demontage von Vouten und Sitzträgerprofilen montiert und auch demontiert werden.

Ein Ausführungsbeispiel der Erfindung ist in der Zeichnung dargestellt und wird nachfolgend beschrieben. Es zeigt:
- Figur 1: einen schematischen Querschnitt durch den Wagenkasten eines gattungsgemäßen Schienenfahrzeuges,
- Figuren 2 und 3: Steckverbindungen zwischen Dekorteilen und Formteilen,
- Figur 4: eine Steckverbindung mit einem Sitzträgerprofil und
- Figur 5: eine Abluftöffnung zwischen Seitenwand und Voute.

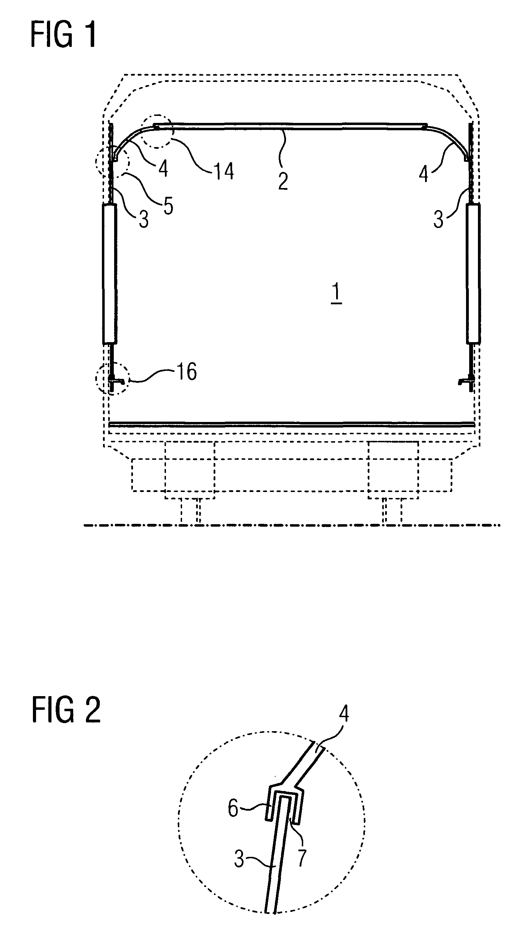

In Figur 1 ist mit 1 ein Schienenfahrzeug bezeichnet, das hier grob schematisch in seinen Umrissen dargestellt ist. Die Innenbekleidung des Fahrzeuges setzt sich aus der Deckenbekleidung 2, der Seitenbekleidung 3 und der Voute 4 zusammen und besteht aus glasfaserverstärkten Dekorplatten bzw. Formteilen, die dem Ambiente des Fahrzeuges angepasst sind. Die einzelnen Formteile bzw. Dekorplatten sind mittels Steckverbindungen aneinandergefügt bzw. an ihren Einbauorten festgelegt.

Figur 2 zeigt vergrößert den Übergangsbereich 5 in Figur 1 zwischen der Voute 4 und der Dekorplatte der Seitenbekleidung 3. Die Voute 4 ist als Formteil aufgeführt, wobei der Kantenbereich bei 6 u-förmig erweitert wurde, um die Dekorplatte der Seitenbekleidung 3 zwischen den Schenkeln des u-förmigen Kantenbereiches aufzunehmen. Wie erkennbar, ist die lichte Weite zwischen den U-Schenkeln wesentlich größer, als für die Dicke der Seitenbekleidung 3 erforderlich wäre, so dass Luft bei 7 durch die Steckverbindung hindurch zirkulieren kann.

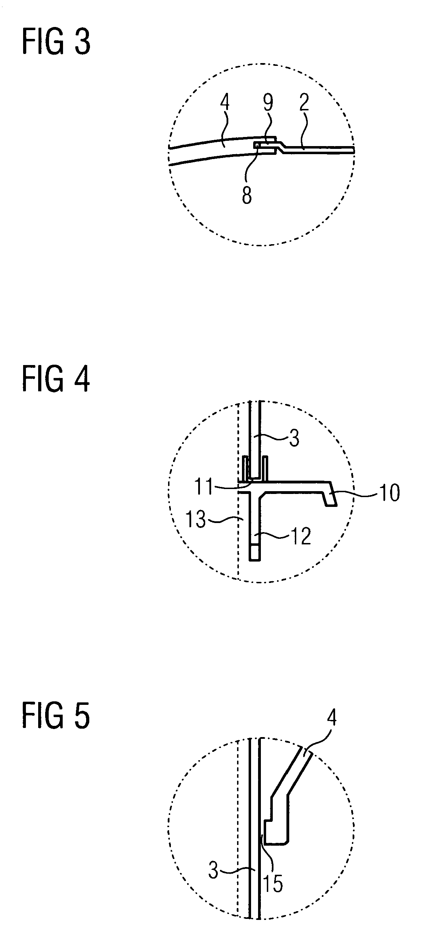

Figur 3 zeigt eine mögliche Verbindung zwischen der Deckenbekleidung 2 und der Voute 4 (im Bereich 14 in Figur 1). Die Stirnseite der Voute 4 enthält hierbei eine eingearbeitete Nut 8, in die der Kantenbereich 9 der Deckenbekleidung 2 eingeschoben ist. Der Kantenbereich 9 ist gegenüber der übrigen Deckenbekleidung gekröpft, so dass die Innenseite der Voute 4 und die Deckenbekleidung 2 eine Ebene bilden.

Figur 4 zeigt die Anbindung der Dekorplatte der Seitenwandbekleidung 3 an ein Sitzträgerprofil 10 (im Bereich 16 in Figur 1), das bei 12 an der Seitenwand 13 des Fahrzeugkastens befestigt ist. Das Sitzträgerprofil 10 weist eine nach oben geöffnete Nut 11 auf, in die die Dekorplatte der Seitenwandbekleidung 3 eingesteckt ist.

In Figur 5 ist eine alternative Darstellung der Anbindung zwischen Voute 4 und der Dekorplatte der Seitenwandbekleidung 3 (im Bereich 5 in Figur 1) gezeigt. Die Voute 4 ist in diesem Fall mit der Deckenbekleidung 2 (beispielsweise wie in Figur 3 gezeigt) gesteckt, jedoch von der Seitenwandbekleidung 3 so weit beabstandet, dass die Luft dazwischen zirkulieren kann, wie bei 15 angedeutet ist.

Alle Teile der Steckverbindung sind so angeordnet, dass eine einfache Montage und leichte Demontage möglich ist, ohne zuvor wesentliche andere Bauteile entfernen zu müssen.

## Patentansprüche

1. Innenbekleidungssystem für Fahrzeuge im Personenverkehr, insbesondere Seitenwand- und Deckenbekleidungen in Schienenfahrzeugen des Nah- und Fernverkehrs, bestehend aus austauschbaren Dekorplatten und Formteilen, wie Vouten im Übergangsbereich zwischen den Seitenwand- und Deckenbekleidungen, sowie Sitzträgerprofilen zur Befestigung der Passagiersitze,
**dadurch gekennzeichnet, dass**
das Innenbekleidungssystem als modulares Stecksystem ausgeführt ist, bei dem die einzelnen Dekorplatten und Formteile (2, 3, 4) mit ineinandersteckbaren Kantenbereichen (6, 9) versehen sind.

2. Innenbekleidungssystem nach Anspruch 1,
**dadurch gekennzeichnet, dass**
die ineinandersteckbaren Kantenbereiche (6, 9) der Dekorplatten und Formteile (2, 3, 4) derart gestaltet sind, dass jeweils einer der Kantenbereiche (6, 9) den anderen Kantenbereich (9) stirnseitig übergreift.

3. Innenbekleidungssystem nach Anspruch 1 und 2,
**dadurch gekennzeichnet, dass**
in die Stirnfläche des Kantenbereiches (6, 9) einer der zu verbindenden Dekorplatten und Formteile (2, 3, 4) eine Nut (8) eingearbeitet ist, deren lichte Weite mindestens der Dicke der einzusteckenden Kante (9) des anderen Formteiles oder der Dekorplatte (2, 3, 4) entspricht.

4. Innenbekleidungssystem nach Anspruch 1 bis 3,
**dadurch gekennzeichnet, dass**
der einzusteckende Kantenbereich (9) der Dekorplatte und des Formteils (2, 3, 4) derart gekröpft ist, dass im eingesteckten Zustand die in das Fahrzeuginnere gewandten benachbarten Oberflächen der beiden ineinander gesteckten Dekorplatten und Formteile (2, 3, 4) in einer gemeinsamen Ebene angeordnet sind.

5. Innenbekleidungssystem nach einem der Ansprüche 1 bis 4,
**dadurch gekennzeichnet, dass**
der Kantenbereich (6, 9) einer der Dekorplatten und Formteile (2, 3, 4) zur Aufnahme des Kantenbereiches (6, 9) des anderen Formteils oder der Dekorplatte (2, 3, 4) stirnseitig u-förmig erweitert ist.

6. Innenbekleidungssystem nach einem der Ansprüche 1 bis 5,
**dadurch gekennzeichnet, dass**
zur Verbindung der Voute (4) mit einer ein Seitenwandteil bildenden Dekorplatte (2 oder 3) die u-förmige Erweiterung des Kantenbereiches (6, 9) an der Voute (4) vorgesehen ist, wobei die Einstecktiefe der Dekorplatte (2 oder 3) der Seitenwand und die lichte Weite der u-förmigen Erweiterung so gestaltet sind, dass zwischen Seitenwandbekleidung (3) und Voute (4) durch die Steckverbindung hindurch Luft (7, 15) zirkulieren kann.

7. Innenbekleidungssystem nach einem der Ansprüche 1 bis 5,
**dadurch gekennzeichnet, dass**
die Steckverbindung zwischen Voute (4) und Deckenbekleidung (2) vorgesehen ist, während im Bereich zwischen Voute (4) und Seitenwandbekleidung (3) ein Spalt zur Luftzirkulation (15) belassen ist.

8. Innenbekleidungssystem nach einem der Ansprüche 1 bis 7,
**dadurch gekennzeichnet, dass**
an den Seitenwänden des Fahrzeuges angeordnete, zur Befestigung der Passagiersitze dienenden Sitzträgerprofile (10) zur Steckaufnahme von Dekorplatten und Formteilen (2, 3, 4) gestaltet sind.

9. Innenbekleidungssystem nach Anspruch 8,
**dadurch gekennzeichnet, dass**
die Sitzträgerprofile (10) eine u-förmige Aufnahme für den Kantenbereich einer eine Seitenwandbekleidung (3) bildenden Dekorplatte aufweisen.

## Claims

1. Interior cladding system for vehicles in passenger transport, in particular side wall and ceiling claddings in rail vehicles of short-distance and long-distance transport, consisting of interchangeable decorative panels and moulded parts, such as coves in the transition region between the side wall and ceiling claddings, and seat support profiles for securing the passenger seats, **characterized in that** the interior cladding system is designed as a modular plug-in system in which the individual decorative panels and moulded parts (2, 3, 4) are provided with edge regions (6, 9) which are pluggable one into the other.

2. Interior cladding system according to Claim 1, **characterized in that** the edge regions (6, 9), which are pluggable one into the other, of the decorative panels and moulded parts (2, 3, 4) are designed in such a manner that in each case one of the edge regions (6, 9) engages over the end side of the other edge region (9).

3. Interior cladding system according to Claims 1 and 2, **characterized in that** a groove (8) is incorporated into the end surface of the edge region (6, 9) of one of the decorative panels and moulded parts (2, 3, 4) to be connected, the clear width of which groove corresponds at least to the thickness of that edge (9) of the other moulded part or of the decorative panel (2, 3, 4) which is to be plugged in.

4. Interior cladding system according to Claims 1 to 3, **characterized in that** the edge region (9) of the decorative panel and of the moulded part (2, 3, 4) which is to be plugged in is bent in such a manner that, in the plugged-in state, the adjacent surfaces, which face the vehicle interior, of the two decorative panels and moulded parts (2, 3, 4) plugged one into the other are arranged in a common plane.

5. Interior cladding system according to one of Claims 1 to 4, **characterized in that** the edge region (6, 9) of one of the decorative panels and moulded parts (2, 3, 4) is expanded on the end side in a U-shaped manner in order to receive the edge region (6, 9) of the other moulded part or of the decorative panel (2, 3, 4).

6. Interior cladding system according to one of Claims 1 to 5, **characterized in that**, in order to connect the cove (4) to a decorative panel (2 or 3) forming a side wall part, the U-shaped expansion of the edge region (6, 9) is provided on the cove (4), wherein the plug-in depth of the decorative panel (2 or 3) of the side wall and the clear width of the U-shaped expansion are configured in such a manner that air (7, 15) can circulate through the plug-in connection between the side wall cladding (3) and cove (4).

7. Interior cladding system according to one of Claims 1 to 5, **characterized in that** the plug-in connection is provided between cove (4) and ceiling cladding (2) while a gap for air circulation (15) is left in the region between cove (4) and side wall cladding (3).

8. Interior cladding system according to one of Claims 1 to 7, **characterized in that** seat support profiles (10) which are arranged on the side walls of the vehicle and serve for securing the passenger seats are configured for the plug-in reception of decorative panels and moulded parts (2, 3, 4).

9. Interior cladding system according to Claim 8, **characterized in that** the seat support profiles (10) have a U-shaped receptacle for the edge region of a decorative panel forming a side wall cladding (3).

## Revendications

1. Système de revêtement intérieur pour des véhicules de transport de personnes, notamment revêtement de paroi latérale et de plafond, de véhicules ferroviaires du service omnibus et du service de grandes lignes, constitué de panneaux de décoration remplaçables et de parties façonnées, comme des voûtes dans la région de transition entre les revêtements de paroi latérale et les revêtements de plafond, ainsi que des profilés formant porte-siège pour la fixation des sièges de passagers, **caractérisé en ce que**
le système de revêtement intérieur est réalisé sous la forme d'un système modulaire à emboîtement, dans lequel les divers panneaux de décoration et les parties ( 2, 3, 4 ) façonnées sont pourvus de deux zones ( 6, 9 ) de bord pouvant s'emboîter l'une dans l'autre.

2. Système de revêtement intérieur suivant la revendication 1,
**caractérisé en ce que**
les zones ( 6, 9 ) de bord pouvant s'emboîter l'une dans l'autre des panneaux de décoration et des parties ( 2, 3, 4 ) façonnées sont conformées de manière à ce que respectivement l'une des zones ( 6, 9 ) de bord empiète du côté frontal sur l'autre zone ( 9 ) de bord.

3. Système de revêtement intérieur suivant la revendication 1 et la revendication 2,
**caractérisé en ce que**
dans la surface frontale de la zone ( 6, 9 ) de bord de l'un des panneaux de décoration à relier et des parties ( 2, 3, 4 ) façonnées est usinée une rainure ( 8 ) dont la largeur correspond au moins à l'épaisseur du bord ( 9 ) à emboîter de l'autre partie façonnée ou du panneau ( 2, 3, 4 ) de décoration.

4. Système de revêtement intérieur suivant la revendication 1 à 3,
**caractérisé en ce que**
la zone ( 9 ) de bord à emboîter du panneau de décoration et de la partie ( 2, 3, 4 ) façonnée est coudée de manière à ce que, à l'état emboîté, les surfaces voisines, tournées vers l'intérieur du véhicule des deux panneaux de décors et des parties ( 2, 3, 4 ) façonnées emboîtés l'un dans l'autre, soient dans un plan commun.

5. Système de revêtement intérieur suivant l'une des revendications 1 à 4,
**caractérisé en ce que**
la zone ( 6, 9 ) de bord de l'un des panneaux de décoration et des parties ( 2, 3, 4 ) façonnées est, pour la réception de la zone ( 6, 9 ) de bord de l'autre partie façonnée ou du panneau ( 2, 3, 4 ) de décoration, en forme de u du côté frontal.

6. Système de revêtement intérieur suivant l'une des revendications 1 à 5,
**caractérisé en ce que**,
pour la liaison de la voûte ( 4 ) à un panneau ( 2 ou 3 ) de décoration formant une partie de paroi latérale, l'élargissement en forme de u de la zone ( 6, 9 ) de bord est prévue sur la voûte ( 4 ), la profondeur d'emboîtement du panneau ( 2 ou 3 ) de décoration de la paroi latérale et la largeur de l'élargissement en forme de u étant conformés de manière à ce que de l'air ( 7, 15 ) puisse circuler par l'emboîtage entre le revêtement de paroi latérale et la voûte ( 4 ).

7. Système de revêtement intérieur suivant l'une des revendications 1 à 5,
**caractérisé en ce que**
l'emboîtage est prévu entre la voûte ( 4 ) et le revêtement ( 2 ) de plafond, tandis qu'un intervalle pour la circulation ( 5 ) de l'air est laissé dans la partie comprise entre la voûte ( 4 ) et le revêtement ( 3 ) de paroi latérale.

8. Système de revêtement intérieur suivant l'une des revendications 1 à 7,
**caractérisé en ce que**
des profilés ( 10 ) de porte-siège, disposés sur les parois latérales du véhicule et servant à la fixation des sièges de passagers, sont conformés pour la réception par emboîtage de panneaux de décoration et de parties ( 2, 3, 4 ) façonnées.

9. Système de revêtement intérieur suivant la revendication 8,
**caractérisé en ce que**
les profilés ( 10 ) formant porte-siège ont un logement en forme de u pour la zone de bord d'un panneau de décoration formant un revêtement ( 3 ) de paroi latérale.
